# EUROPEAN PATENT SPECIFICATION

(11) **EP 3 539 351 B1**
(45) Date of publication and mention of the grant of the patent: **11.05.2022**
(21) Application number: 17870190.0
(22) Date of filing: 13.11.2017
(51) Int. Cl.: H04L 5/00, H04W 36/00, H04W 76/27, H04W 24/10

(54) **DEVICES FOR PER-CC MEASUREMENT GAP CONFIGURATION**
VORRICHTUNGEN ZUR PER-CC-MESSLÜCKENKONFIGURATION
DISPOSITIFS DE CONFIGURATION D'INTERVALLE DE MESURE POUR CHAQUE PORTEUSE COMPOSANTE

(30) Priority: 14.11.2016 US 201662421869 P
(43) Date of publication of application: 18.09.2019
(73) Proprietor: Apple Inc., Cupertino, CA 95014 (US)
(72) Inventor: YIU, Candy, Portland, OR 97201 (US); HUANG, Rui, Beijing, 11, 100085 (CN); TANG, Yang, Pleasanton, CA 94588 (US); CUI, Jie, Santa Clara, CA 95054 (US)
(74) Representative: Lang, Johannes
(86) International application number: PCT/US2017/061352
(87) International publication number: WO 2018/089917

(56) References cited:
- EP-A1- 3 091 686
- WO-A1-2016/164782
- KR-A- 20100 010 384
- US-A1- 2013 029 679
- US-A1- 2014 341 192
- INTEL CORPORATION: "Signaling support for NCSG and per CC measurement gap", 3GPP DRAFT; R2-1701298, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20170213 - 20170217 12 February 2017 (2017-02-12), XP051211963, Retrieved from the Internet: URL:http://www.3gpp.org/ftp/Meetings_3GPP_ SYNC/RAN2/Docs/ [retrieved on 2017-02-12]
- RAN WG4: "[DRAFT] LS on Measurement gap enhancement", 3GPP DRAFT; R4-167024, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Gothenburg, Sweden; 20160822 - 20160826 31 August 2016 (2016-08-31), XP051136627, Retrieved from the Internet: URL:http://www.3gpp.org/ftp/tsg_ran/WG4_Ra dio/TSGR4_80/Docs/ [retrieved on 2016-08-31]

## Description

### PRIORITY CLAIM

This application claims the benefit of priority to United States Provisional Patent Application Serial No. 62/421,869, filed November 14, 2016, and titled "STAGE 3 FOR PER CC MEASUREMENT GAP CONFIGURATION".

### TECHNICAL FIELD

Embodiments pertain to systems, methods, and component devices for wireless communications, and particularly to gap measurement handling in Third Generation Partnership Project (3GPP) communication systems.

### BACKGROUND

Long term evolution (LTE) and LTE-Advanced are standards for wireless communication information (e.g. voice and other data) for user equipment (UE) such as mobile telephones. Such systems operate with UEs communicating with a network via cells of radio access technology (RAT) systems which may include an evolved node B (eNB) or other base station systems for providing an initial wireless connection to the larger system. As part of the communication between a UE and an eNB an one or more carriers, the system may manage measurement of peripheral carriers and cells other than the ones being used by the UE using measurement gaps.

LS on measurement gap enhancement, 3GPP TSG-RAN WG4 Meeting #80, R4-167024 discloses that there has been work on measurement gap enhancements for LTE. Requirements for shorter measurement gap length measurement gaps, per component carrier based configuration of gaps in carrier aggregation/dual connectivity, and measurement gaps for interruption control are to be introduced.

### BRIEF DESCRIPTION OF THE FIGURES

The invention is defined by the independent claims. Preferred embodiments are described by the dependent claims. In the figures, which are not necessarily drawn to scale, like numerals may describe similar components in different views. Like numerals having different letter suffixes may represent different instances of similar components. The figures illustrate generally, by way of example, but not by way of limitation, various embodiments discussed in the present document.
FIG. 1 is a diagram of a wireless network, in accordance with some embodiments.
FIG. 2 illustrates components of a wireless communication network, in accordance with some embodiments.
FIG. 3 illustrates operations and communications for per component carrier measurement gap configurations in accordance with some embodiments.
FIG. 4 illustrates operations and communications for per component carrier measurement gap configurations in accordance with some embodiments.
FIG. 5 illustrates an example method performed by a UE, in accordance with embodiments described herein.
FIG. 6 illustrates an example method performed by a network device, in accordance with embodiments described herein.
FIG. 7 illustrates an example UE, which may be configured for specialized operation or otherwise used with various embodiments described herein.
FIG. 8 is a block diagram illustrating an example computer system machine which may be used in association with various embodiments described herein.
FIG. 9 illustrates aspects of a UE, a wireless apparatus, or a device, in accordance with some example embodiments.
FIG. 10 illustrates example interfaces of baseband circuitry in accordance with some embodiments.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. Embodiments set forth in the claims encompass all available equivalents of those claims.

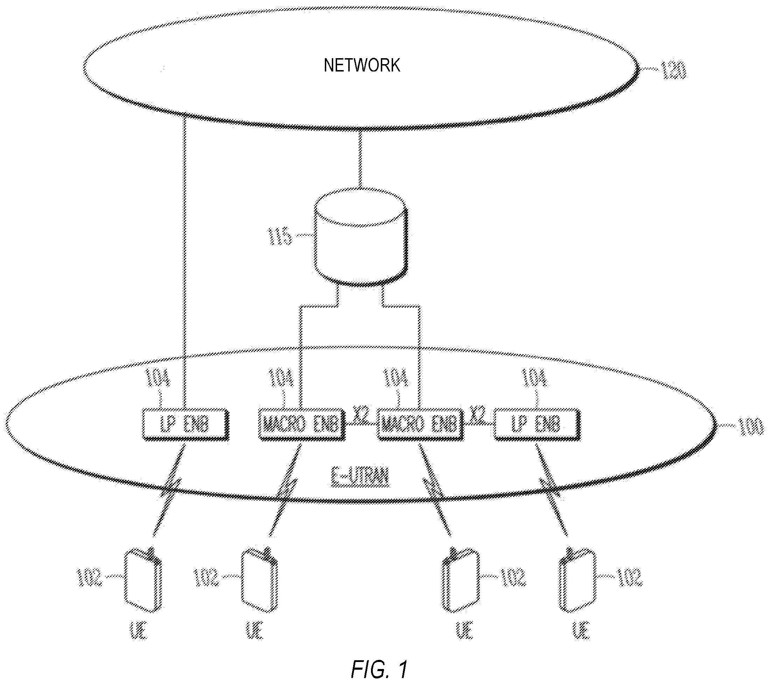

FIG. 1 shows an example of a portion of an end-to-end network architecture of a network (e.g., an LTE network, a 3GPP standardized network, a compatible NextGen system, etc.) with various components of the network, in accordance with some embodiments. Such a network architecture may be used to implement various communication system implementations, including systems that operate with configurable measurement gap settings for per component carrier (CC) gap configurations. Such systems operate as part of complex carrier aggregation (CA) capabilities to allow a network to efficiently measure network conditions and enable communication operations under the measured conditions.

As used herein, "LTE network" refers to both LTE and LTE Advanced (LTE-A) networks, as well as other versions of LTE networks in development, such as 4G and 5G LTE networks, which are examples of NextGen networks. The network may comprise a radio access network (RAN) (e.g., as depicted, the Evolved Universal Terrestrial Radio Access Network (EUTRAN)) 100 and a core network 120. For convenience and brevity, only a portion of the core network 120, as well as the RAN 100, is shown in the example.

The core network 120 may include various components, such as a mobility management entity (MME), a serving gateway (S-GW), and a packet data network gateway (PDN GW), in addition to other elements discussed below. Various core network systems may include different combinations of elements as described herein. The RAN 100 may include evolved node Bs (eNBs) 104 (which may operate as base stations) for communicating with user equipment (UEs) 102. The eNBs 104 may include macro eNBs and low-power (LP) eNBs. The eNBs 104 may employ the techniques described herein to communicate information between a core network 120 and a UE 102 as described herein.

The eNBs 104 (macro and LP) may terminate the air interface protocol and may be the first point of contact for a UE 102. In some embodiments, an eNB 104 may fulfill various logical functions for the RAN 100 including, but not limited to, radio network controller (RNC) functions such as radio bearer management, uplink and downlink dynamic radio resource management and data packet scheduling, and mobility management. In accordance with some embodiments, the UEs 102 may be configured to communicate orthogonal frequency division multiplexed (OFDM) communication signals with an eNB 104 over a multi-carrier communication channel in accordance with an orthogonal frequency-division multiple access (OFDMA) communication technique. The OFDM signals may comprise a plurality of orthogonal subcarriers.

An interface 115 may be the interface that separates the RAN 100 and the core network 120. It may be split into two parts in some embodiments: the S1-U, which may carry traffic data between the eNBs 104 and an S-GW the core network 120, and the S1-MME, which may be a signaling interface between the eNBs 104 and an MME the core network. An X2 interface may be the interface between pairs of the eNBs 104. The X2 interface may comprise two parts: the X2-C and X2-U. The X2-C may be the control-plane interface between the eNBs 104, while the X2-U may be the user-plane interface between the eNBs 104.

In cellular networks, the LP eNBs 104 in some embodiments are used to extend coverage to indoor areas where outdoor signals do not reach well, or to add network capacity in areas with dense usage. In particular, it may be desirable to enhance the coverage of a wireless communication system using cells of different sizes, such as macrocells, microcells, picocells, and femtocells, to boost system performance. The cells of different sizes may operate on the same frequency band, or may operate on different frequency bands with each cell operating on a different frequency band or only cells of different sizes operating on different frequency bands. As used herein, the term "LP eNB" refers to any suitable relatively LP eNB for implementing a smaller cell (smaller than a macrocell) such as a femtocell, a picocell, or a microcell. Femtocell eNBs are, in some embodiments, provided by a mobile network operator to its residential or enterprise customers. A femtocell, in some embodiments, is the size of a residential gateway or smaller and may generally connect to a broadband line. The femtocell may connect to the mobile operator's mobile network and provide extra coverage in a range of 30 to 50 meters. Similarly, a picocell may be a wireless communication system covering a small area, such as in-building (offices, shopping malls, train stations, etc.), or more recently, in-aircraft. A picocell eNB may generally connect through the X2 link to another eNB such as a macro eNB through its base station controller (BSC) functionality. Thus, an LP eNB 104 may be implemented with a picocell eNB since it may be coupled to a macro eNB 104 via an X2 interface. Picocell eNBs or other such devices may incorporate some or all functionality of a macro eNB 104 or LP eNB 104. In some cases, this may be referred to as an access point base station or enterprise femtocell. In various embodiments as part of carrier aggregation operations, a UE may communicate with a single cell eNB via multiple frequency bands, or via multiple different cells or eNBs. As part of such operations, the network may schedule a UE to perform measurements on various adjacent cells or frequency bands as described in more detail below. Per CC measurement gap configurations may be used for such measurements in accordance with various embodiments described herein.

Communication over an LTE network may be split up into 10ms radio frames, each of which may contain ten 1ms subframes. Each subframe of the frame, in turn, may contain two slots of 0.5ms. Each subframe may be used for uplink (UL) communications from the UE 102 to the eNB 104 or downlink (DL) communications from the eNB 104 to the UE 102. In one embodiment, the eNB 104 may allocate a greater number of DL communications than UL communications in a particular frame. The eNB 104 may schedule transmissions over a variety of frequency bands. Each slot of the subframe may contain 6-7 OFDM symbols, depending on the system used. In one embodiment, each subframe may contain 12 subcarriers. In the 5G system or NextGen systems, however, the frame size (in ms), the subframe size, and the number of subframes within a frame, as well as the frame structure, may be different from those of a 4G or LTE system. The subframe size, as well as the number of subframes in a frame, may also vary in the 5G system from frame to frame. For example, while the frame size may remain at 10ms in the 5G system for downward compatibility, the subframe size may be decreased to 0.2ms or 0.25ms to increase the number of subframes in each frame.

A downlink resource grid may be used for downlink transmissions from an eNB to a UE, while an uplink resource grid may be used for uplink transmissions from a UE to an eNB or from a UE to another UE. The resource grid may be a time-frequency grid, which is the physical resource in the downlink in each slot. The smallest time-frequency unit in a resource grid may be denoted as a resource element (RE). Each column and each row of the resource grid may correspond to one OFDM symbol and one OFDM subcarrier, respectively. The resource grid may contain resource blocks (RBs) that describe the mapping of physical channels to resource elements and physical RBs (PRBs). A PRB may be the smallest unit of resources that can be allocated to a UE. An RB in some embodiments may be 180 kHz wide in frequency and one slot long in time. In frequency, RBs may be either 12 × 15 kHz subcarriers or 24 × 7.5 kHz subcarriers wide, dependent on the system bandwidth. In Frequency Division Duplexing (FDD) systems, both the uplink and downlink frames may be 10ms and frequency (full-duplex) or time (half-duplex) separated. The duration of the resource grid in the time domain corresponds to one subframe or two resource blocks. Each resource grid may comprise 12 (subcarriers) × 14 (symbols) = 168 resource elements.

Each OFDM symbol may contain a cyclic prefix (CP), which may be used to effectively eliminate Inter Symbol Interference (ISI), and a Fast Fourier Transform (FFT) period. The duration of the CP may be determined by the highest anticipated degree of delay spread. Although distortion from the preceding OFDM symbol may exist within the CP, with a CP of sufficient duration, preceding OFDM symbols do not enter the FFT period. Once the FFT period signal is received and digitized, the receiver may ignore the signal in the CP.

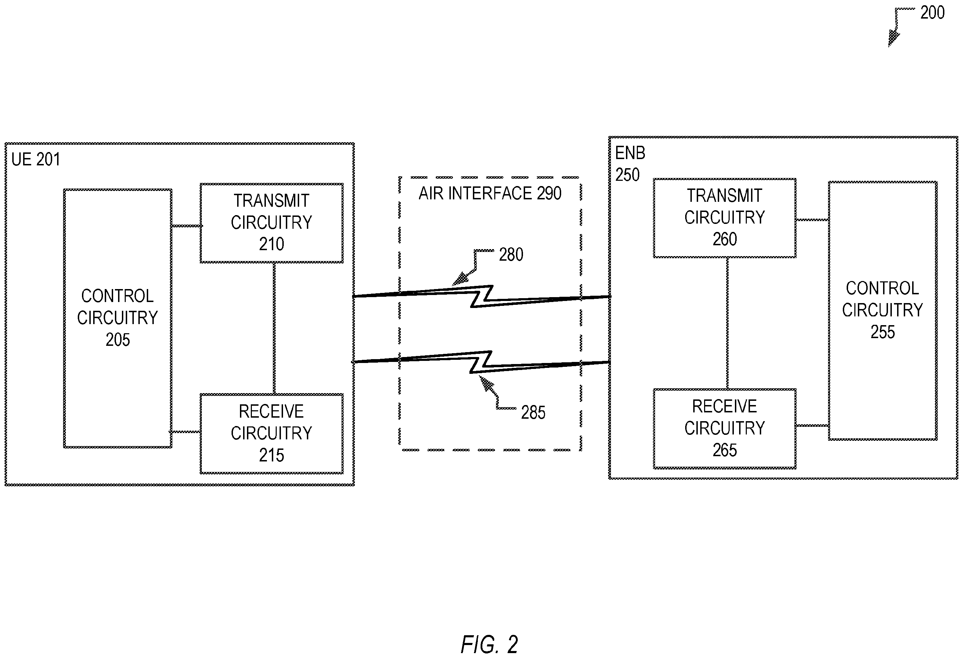

FIG. 2 illustrates a wireless network 200, in accordance with some embodiments. The wireless network 200 includes a UE 201 and an eNB 250 connected via one or more channels 280, 285 across a radio interface 290. The UE 201 and eNB 250 communicate using a system that supports controls for managing the access of the UE 201 to a network via the eNB 250.

In the wireless network 200, the UE 201 and any other UE in the system may be, for example, laptop computers, smartphones, tablet computers, printers, machine-type devices such as smart meters or specialized devices for healthcare monitoring, remote security surveillance systems, intelligent transportation systems, or any other wireless devices with or without a user interface. The eNB 250 provides the UE 201 network connectivity to a broader network (not shown). This UE 201 connectivity is provided via the radio interface 290 in an eNB service area provided by the eNB 250. In some embodiments, such a broader network may be a wide area network (WAN) operated by a cellular network provider, or may be the Internet. Each eNB service area associated with the eNB 250 is supported by antennas integrated with the eNB 250. The service areas are divided into a number of sectors associated with certain antennas. Such sectors may be physically associated with fixed antennas or may be assigned to a physical area with tunable antennas or antenna settings adjustable in a beamforming process used to direct a signal to a particular sector. One embodiment of the eNB 250, for example, includes three sectors, each covering an approximately 120-degree area, with an array of antennas directed to each sector to provide 360-degree coverage around the eNB 250. In various embodiments described herein, a UE may perform measurements on different cells associated with such sectors, where the measurements may or may not require the use of a measurement gap, depending on UE capabilities.

The UE 201 includes control circuitry 205 coupled with transmit circuitry 210 and receive circuitry 215. The transmit circuitry 210 and receive circuitry 215 may each be coupled with one or more antennas. The control circuitry 205 may be adapted to perform operations associated with wireless communications using congestion control. The control circuitry 205 may include various combinations of application-specific circuitry and baseband circuitry. The transmit circuitry 210 and receive circuitry 215 may be adapted to transmit and receive data, respectively, and may include radio frequency (RF) circuitry or front end module (FEM) circuitry. In various embodiments, aspects of the transmit circuitry 210, receive circuitry 215, and control circuitry 205 may be integrated in various ways to implement the circuitry described herein. The control circuitry 205 may be adapted or configured to perform various operations such as those described elsewhere in this disclosure related to a UE. The transmit circuitry 210 may transmit a plurality of multiplexed uplink physical channels. The plurality of uplink physical channels may be multiplexed according to time division multiplexing (TDM) or frequency division multiplexing (FDM) along with carrier aggregation. The transmit circuitry 210 may be configured to receive block data from the control circuitry 205 for transmission across the radio interface 290. Similarly, the receive circuitry 215 may receive a plurality of multiplexed downlink physical channels from the radio interface 290 and relay the physical channels to the control circuitry 205. The plurality of downlink physical channels may be multiplexed according to TDM or FDM along with carrier aggregation. The transmit circuitry 210 and the receive circuitry 215 may transmit and receive both control data and content data (e.g., messages, images, video, etc.) structured within data blocks that are carried by the physical channels. For a device configured for low-bandwidth or irregular communications (e.g., utility meters, stationary sensors, etc.), customized circuitry and antennas may be used to enable communications on a narrow bandwidth (e.g., 180 kHz, or other similar narrow bandwidths) to enable the device to consume small amounts of network resources.

FIG. 2 also illustrates the eNB 250, in accordance with various embodiments. The eNB 250 circuitry may include control circuitry 255 coupled with transmit circuitry 260 and receive circuitry 265. The transmit circuitry 260 and receive circuitry 265 may each be coupled with one or more antennas that may be used to enable communications via the radio interface 290.

The control circuitry 255 may be adapted to perform operations for managing channels and congestion control communications used with various UEs, including communication of open mobile alliance (OMA) management objects (OMA-MOs) describing application categories, as detailed further below. The transmit circuitry 260 and receive circuitry 265 may be adapted to transmit and receive data, respectively, to any UE connected to the eNB 250. The transmit circuitry 260 may transmit downlink physical channels comprised of a plurality of downlink subframes. The receive circuitry 265 may receive a plurality of uplink physical channels from various UEs including the UE 201. In embodiments described herein, the receive circuitry 265 may receive a plurality of uplink physical channels simultaneously on multiple unlicensed-frequency channels from a single UE.

Carrier aggregation (CA) is a technique used to increase the bandwidth between a UE and a network. This technique involves a UE communicating data over multiple different channels, with each aggregated carrier channel referred to as a component carrier. These component carriers may be adjacent carriers in a frequency band, or may be spread among any frequencies available to a communication system.

In order to facilitate smooth network transitions (e.g., cell handovers, redirection, reselection, or the like)) with high a quality of experience (QoE), the UE has the capability to measure surrounding cells and provide related data to the network. In network deployment situations there may be many frequencies, some of the frequency carriers can be micro cells that have been deployed back to back in dense network deployments as described above. However, the UE may not be able to switch to those cells as a result of a large load within the macro cell, for example. As a result of a large network deployment density, the UE may not be able to access these small cells depending on the location of the UE. If the UE misses chances of measuring small cell frequency carriers, it might not have a backup network available. Additionally, if it misses measurements to the macro layers, the UE may not be able to handover fast enough and a call could drop.

As part of standard communication system operations, a network may have a UE perform measurements on various frequency bands and various cells of eNBs close to the UE. For simple systems with one antenna and a single receive (Rx) and transmit (Tx) system, a "measurement gap" is scheduled within the data transmissions between the UE and the network to enable the UE to perform the measurements. A measurement gap pattern can be referred to as the pattern of measurement gaps that the UE can facilitate frequency carrier (e.g., CC) measurements on within a time period or duration. The UE, for example, can operate during a measurement gap to switch from a serving band it is connected on to a different band (or CC) in order to perform a measurement of the (component) carrier. The term serving band as used herein means the UE can be connected to that band as a serving band to receive downlink data on, in this case no measurement is necessarily required in that band because the UE is already operating in or on that band.

For UEs with multiple communication Rx and Tx chains and a large number of CA channels, a measurement gap is not always needed, and the circumstances under which a measurement gap is needed may be complex. As the band combinations in CA systems increase, the measurement gap requirements also become more complex, and are further complicated by device hardware (e.g. digitizers, filters, or other components that may be shared among channels for processing multiple component carriers). Due to such complexities, a standard measurement gap for every measurement to be performed by a UE is inefficient. For example, in some embodiments an Embodiments described herein avoid wasting resources (e.g. bandwidth and power) on unnecessary measurement gaps by using measurement gaps that are configured on a per component carrier basis.

Embodiments herein thus describe per component carrier (Per-CC) based configuration of gaps in carrier aggregation/dual connectivity, such that identical gap configuration is not required on all serving cells to make measurements under the assumption that the UE has multiple RF chains. In some embodiments, UEs with multiple RF chains are able to measure more than one measurement object. The capability to do this may depend on both baseband and RF architectures. Additionally, various embodiments may combine such operations with the use of measurement gaps for interruption control to avoid autonomous interruptions with UEs may make in certain scenarios. Additionally, per CC gap configuration may also use shorter measurement graph length (MGL) measurement gaps in some embodiments, which may be used to make measurements when there is a known or approximately known timing relationship between serving frequency/frequencies and target frequencies to be measured. In such embodiments, the gap can be shorter than 6 milliseconds (ms) while still allowing neighbor primary synchronization signals (PSS) and secondary synchronization signals (SSS) to be detected as part of measurement operations.

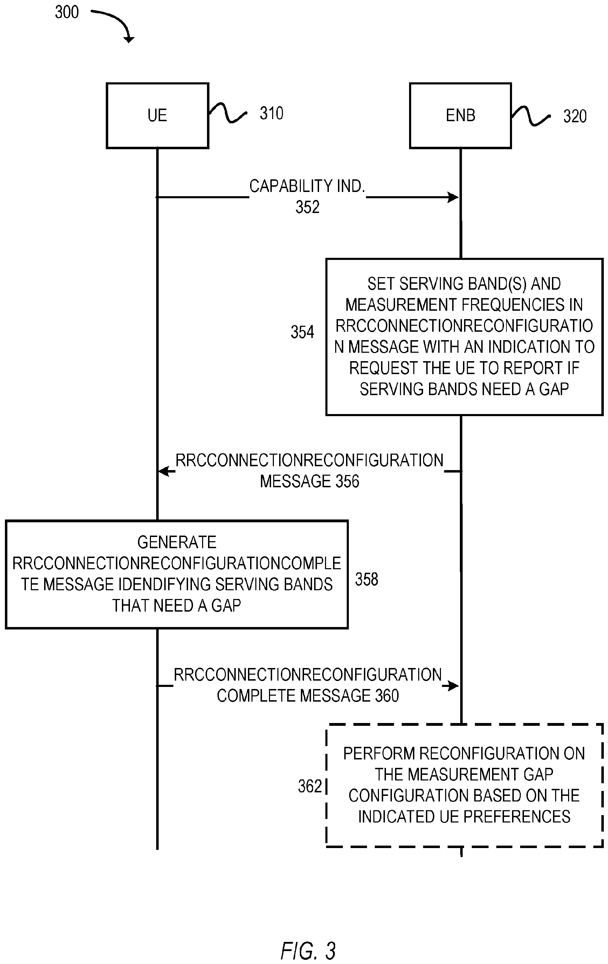

FIG. 3 illustrates operations 300 for per component carrier measurement gap configuration in accordance with some embodiments. FIG. 3 includes UE 310 communicating with a network 320 that includes an eNB. In some embodiments, the operations performed by network 320 may be performed by processing circuitry of the eNB of network 320. In other embodiments, other elements of the network 320 may perform some of the reconfiguration operations described in FIG. 3. In FIG. 3, the operations 300 begin with operation 352 where UE 310 indicates a capability that it supports a per CC measurement gap feature. In operation 354, the network configures the serving band(s) and measurement frequencies in an RRCConnectionReconfiguration message, along with an indication to request the UE to report if the serving band needs a gap or not. This RRCConnectionReconfiguration message is then sent from the eNB of network 320 to UE 310 in operation 356.

Below is an example information element (IE) for an RRCConnectionReconfiguration message including a request for the UE to report if the serving band needs a gap:

```
        RRCConnectionReconfiguration-vl310-IEs ::= SEQUENCE {
        sCellToReleaseListExt-r13 SCellToReleaseListExt-r13
                    OPTIONAL, --Need ON
        sCellToAddModListExt-r13 SCellToAddModListExt-
        r13 OPTIONAL, -- Need ON
        lwa-Configuration-r13 LWA-
        Configuration-r13 OPTIONAL, -- Need ON
        lwip-Configuration-r13 LWIP-
        Configuration-r13 OPTIONAL, -- Need ON
        rclwi-Configuration-r13 RCLWI-Configuration-r13
                           OPTIONAL, -- Need ON
        nonCriticalExtension
        } RRCConnectionReconfiguration-vxy-IEs OPTIONAL
        RRCConnectionReconfiguration-vxy-IEs ::= SEQUENCE {
        perCCgapRequest ENUMERATED
         {true} OPTIONAL, -- Need ON
        nonCriticalExtension SEQUENCE {}
        } OPTIONAL
```

The following table then illustrates an example field description for a per component carrier gap indication request (perCCgapRequest).

**TABLE 1**

| ***RRCConnectionReconfiguration* field descriptions** |
|---|
| ***perCCgapRequest*** |
| This field is used to request the UE to send the measurement gap is needed or not for the configured serving bands. |

When UE 310 receives the RRCConnectionreconfiguration message and decodes the message to identify the perCCgapRequest, the UE then generates an RRCConnectionReconfiguration Complete message in operation 358. In operation 360, the UE then sends the RRCConnectionReconfigurationComplete message in response, identifying whether each serving band needs a gap or not in a bit string based on the configured serving band, the frequency used to make measurements, and the UE Rx chain capability. The following is an example IE for an RRCConnectionReconfigurationComplete message:

```
        RRCConnectionReconfigurationComplete-v1250-IEs ::= SEQUENCE
         {
              logMeasAvailableMBSFN-r12
              ENUMERATED {true}
                    OPTIONAL,
              nonCriticalExtension
        } RRCConnectionReconfigurationComplete-vxy-IEs OPTIONAL
        RRCConnectionReconfigurationComplete-vxy-IEs ::= SEQUENCE {
              ServingBandNeedGap BIT STRING
        (SIZE(32)) OPTIONAL,
              nonCriticalExtension SEQUENCE {}
                                              OPTIONAL
        }
```

Table 2 below then illustrates a field description for the information used to indicate if the UE needs a measurement gap on a serving band.

**TABLE 2**

| ***RRCConnectionReconfigurationComplete* field descriptions** |
|---|
| ***servingBandNeedGap*** |
| This field is used to indicate if the UE needs measurement gap on the serving band or not. ' 1' indicates it needs gap. Otherwise gap is not needed. Each bit string is corresponding to ServingCellIdx. |

Following receipt of the
RRCConnectionReconfigurationComplete message at the eNB of network 320, in some embodiments, optional operation 362 involves the network then performing reconfiguration on the measurement gap configuration based on the UE preferences. In some such embodiments, a measConfig IE or other associated configuration settings at the network are extended to included extended data. Otherwise, the network can use the bit string the UE sends to infer if the measurement gap is needed or not. As one example embodiment, in situations where a gap is needed, the example IE below may be used:

```
        MeasGapConfig ::= CHOICE {
        release
             NULL,
        setup SEQUENCE
         {
        gapOffset CHOICE {
                    gp0
                    INTEGER (0..39),
                                 gp1
                                 INTEGER (0..79),
                                 gp0-perCC
                           SEQUENCE{
                                        offset
                                 INTEGER (0..39),
                                        ServingBandNeedGap
                                 BIT STRING (SIZE(32))
                                 }
                                 gp1-perCC
                           SEQUENCE{
                                        offset
                                 INTEGER (0..79),
                                        ServingBandNeedGap
                                 BIT STRING (SIZE(32))
                                 }
                    }
             }
        }
```

In some embodiments, information on a UE capability and the need for information gaps in certain circumstances may be stored in a table at the UE, and used to respond to a perCCgaprequest. This information may be used in different ways to respond to the perCCgaprequest in different embodiments. When a UE signals a response for all carrier aggregation combinations, this does not necessarily cover all measurement possibilities. Table 3 below, for example, illustrates information for a set of serving bands A, B, C, D, E, F, and G when the network indicates that it only supports a first combination of bands A, B, and C and a second combination of bands D, E, and F. The UE may respond with the following information:

**TABLE 3**

| Need gap on band? | A | B | C | D | E | F | G |
|---|---|---|---|---|---|---|---|
| A | - | No gap | No gap | | | | |
| B | No gap | - | No gap | | | | |
| C | No gap | No gap | - | | | | |
| D | | | | - | No gap | No gap | |
| E | | | | No gap | - | No gap | |
| F | | | | No gap | No gap | - | |
| G | | | | | | | - |

The empty fields in table 3 indicate a lack of information about whether the UE can measure the band without a gap or not. For example, as shown in TABLE 3, when for a band A measurement, no gap is needed for bands B and C, and there is no information on whether a gap is needed for bands D, E, F, and G. Carrier aggregation combination data may thus not cover all combinations of the per component carrier capability even when the UE reports all carrier aggregation combination information. Similarly, in fallback features, a UE may not report all carrier aggregation combinations. This reduces the per component carrier capability. This reduces the configuration information, but limits the ability of the system to perform a measurement on different bands (e.g. band G) that are not supported by the system.

TABLE 4 illustrates an alternative example of carrier aggregation combination data that may be stored at a UE. TABLE 4 includes details on whether a gap is needed for each combination of bands.

**TABLE 4**

| Need gap on band? | A | B | C | D | E | F | G |
|---|---|---|---|---|---|---|---|
| A | - | No gap | No gap | No gap | Need gap | Need gap | No gap |
| B | No gap | - | No gap | No gap | Need gap | Need gap | No gap |
| C | No gap | No gap | - | Need gap | Need gap | Need gap | Need gap |
| D | No gap | No gap | Need gap | - | No gap | No gap | No gap |
| E | Need gap | Need gap | Need gap | No gap | - | No gap | Need gap |
| F | Need gap | Need gap | Need gap | No gap | No gap | - | Need gap |
| G | No gap | No gap | Need gap | No gap | Need gap | Need gap | - |

The option of TABLE 4 may thus operate where a UE supports all a systems band configurations, including bands not currently configured for UE operation. In some systems, a difference between a UE responding with information similar to TABLE 3 and information similar to TABLE 4, is that, for TABLE 3, the UE preference information is based on the network configured carrier aggregation band combinations. For TABLE 4, instead of basing the preference information on the carrier aggregation band combinations that are set, all supported combinations are reported. Thus, when preference reported for TABLE 4 is used, if the network configures bands A, B, and C for use with the UE, the network may still request the UE to measure band G with configured per CC gap settings, even though band G is not configured for use with band G. As described below, in some embodiments, the data of TABLES 3 and 4 may, in some embodiments, be structured as data strings for inclusion in an IE communicated to a network to inform the network of the UE preferences for per CC gap configurations based on UE capabilities. In some embodiments, additional information may be based on different UE modes, with tables including information for given frequency bands under a normal operating mode and a low power operating mode when an Rx chain may be powered down. In other embodiments, any other such modes may be supported, with each mode having corresponding per CC measurement gap preferences. Some or all of such preferences may be communicated from a UE to the network in various different systems.

In addition, some embodiments may operate with an alternative extended measConfig to indicate which serving bands don't need a gap. For example, using the above set of hypothetical bands A-G from TABLE 4, if the serving bands includes A, B, D, and E with measurements on bands C, F, and G, a network may configure (1,0,1,0) to the UE to indicate A and D need a measurement gap. Such an embodiment involves a UE figuring out how to schedule to measure C, F, and G for the given gaps. Additional complexity may be involved if a UE turns off some Rx chains to conserve power, such that a (0,1,1,1) configuration may provide benefits for the UE. Such embodiments may use new signaling to indicate this preference.

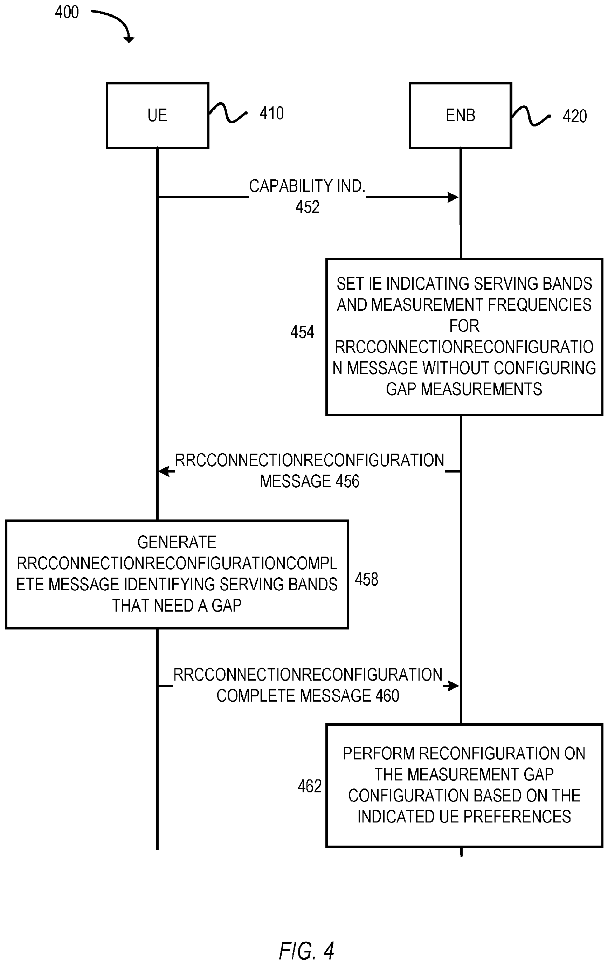

FIG. 4 illustrates additional operations 400 for per component carrier measurement gap configurations in accordance with some embodiments. Just as above for FIG. 3, FIG. 4 includes UE 410 and network 420 which includes an eNB. In the operations of FIG. 4, operation 452 indicates the capability that the UE supports a per CC measurement gap feature. Following this indication, in operation 454, the network indicates in a new IE the serving band(s) and measurement frequencies in the RRCConnectionReconfiguration message. No gap measurement configuration is set at this point (e.g. in contrast to operation 354 where an initial measurement gap configuration may be set). In operation 456, the eNB communicates the RRCConnectionReconfiguration message 456, and the UE 410 responds by generating an RRCConnectionReconfigurationComplete message identifying serving bands that need a gap. The UE then sends the RRCConnectionReconfigurationComplete message in operation 460 to respond whether each serving band needs a gap or not in a bit string based on a configured serving band, a frequency to be measured, and the UE Rx chain capability. In operation 462, the network then performs reconfiguration on the measurement gap configuration to indicate a configuration based on the UE preference.

In some such embodiments, per CC and network controlled small gap (NCSG) indications may be sent together. In such embodiments, similar alternatives may be used with modifications in the IE as indicated in the below example to include NCSG information:

```
        RRCConnectionReconfigurationComplete-v1450-IEs ::= SEQUENCE
         {
              logMeasAvailableMBSFN-r12
              ENUMERATED {true}
                    OPTIONAL,
              nonCriticalExtension
              RRCConnectionReconfigurationComplete-vxy-IEs OPTIONAL
         }
        RRCConnectionReconfigurationComplete-vxy-IEs ::= SEQUENCE {
              ServingBandNeedGap BIT STRING
        (SIZE(32)) OPTIONAL,
             NCSGgap BIT
        STRING (SIZE(32)) OPTIONAL,
              nonCriticalExtension SEQUENCE {}
                          OPTIONAL
        } 
```

**TABLE 5**

| ***RRCConnectionReconfigurationComplete* field descriptions** |
|---|
| ***servingBandNeedGap*** |
| This field is used to indicate if the UE needs measurement gap on the serving band or not. ' 1' indicates it needs gap. Otherwise gap is not needed. Each bit string is corresponding to ServingCellIdx. |

TABLE 5 illustrates an addition field description in conjunction with the above and below example IEs.

```
        MeasGapConfig ::= CHOICE {
              release
             NULL,
              setup
              SEQUENCE {
              gapOffset
              CHOICE {
                                 gp0
                                 INTEGER (0..39),
                                 gp1
                                 INTEGER (0..79),
                                 gp0-perCC
                           SEQUENCE{
                                        offset
                                 INTEGER (0..39),
                                        ServingBandNeedGap
                                 BIT STRING (SIZE(32)),
                                        NCSGgap
                                        BIT STRING (SIZE(32))
                                 },
                                 gp1-perCC
                           SEQUENCE{
                                        offset
                                 INTEGER (0..79),
                                        ServingBandNeedGap
                                 BIT STRING (SIZE(32)),
                                        NCSGgap
                                        BIT STRING (SIZE(32))
                                 }
                           }
                 }
      }
```

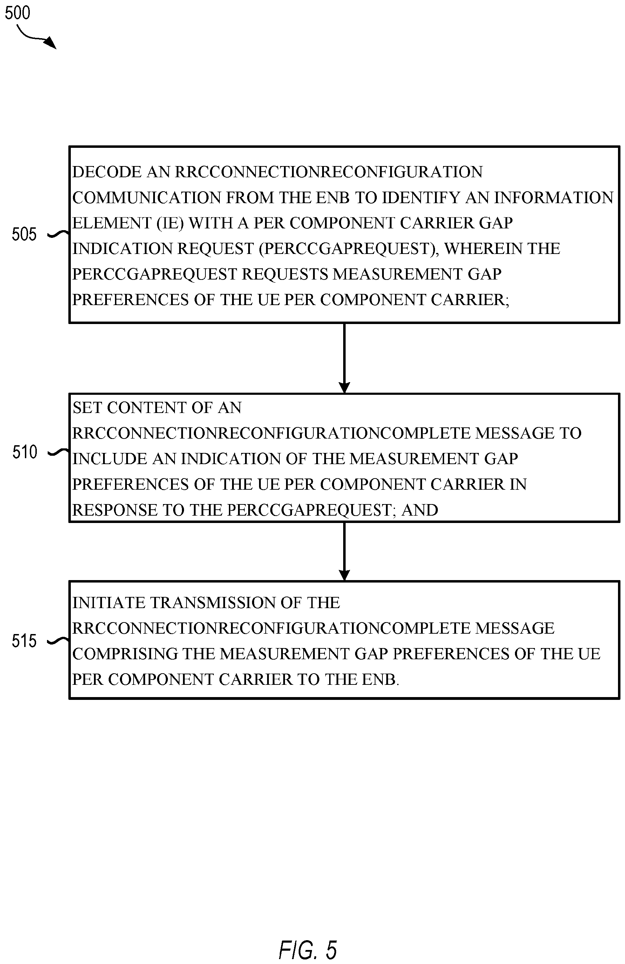

}FIG. 5 illustrates an example method 500 performed by a UE, in accordance with embodiments described herein. In some embodiments, method 500 of FIG. 5 may be implemented by one or more processors of a UE such as UE 102, 201, 700, or an apparatus of any UE or machine that includes processing circuitry. In other embodiments, method 500 may be implemented as computer-readable instructions in a storage media that, when executed by one or more processors of a device, cause the device to perform method 500.

Example method 500 begins with operation 502 where a UE or processing circuitry of an apparatus of a UE decodes an RRCConnectionReconfiguration communication from an eNB to identify an information element (IE) with a per component carrier gap indication request (perCCgapRequest). The perCCgapRequest requests measurement gap preferences of the UE per component carrier, and in operation 504, the circuitry sets content of an RRCConnectionReconfigurationComplete message to include an indication of the measurement gap preferences of the UE per component carrier in response to the PerCCgapRequest. Then in operation 506, the circuitry initiates transmission of the RRCConnectionReconfigurationComplete message comprising the measurement gap preferences of the UE per component carrier to the eNB.

As described above, in various embodiments, this may be preceded by the circuitry initiating communication of an indication that a UE has a per CC measurement gap configuration capability. Additionally, following these operations, the circuitry may perform various measurements on component carriers of a network using the configured per CC measurement gap to synchronize with the network, and then communicate the results to the network.

Particular embodiments may operate in a variety of different ways. For example, in some embodiments, the perCCgapRequest comprises a non-Critical Extension of the RRCConnectionReconfiguration communication, and in some embodiments, the processing circuitry sets the content of the RRCConnectionReconfigurationComplete message with a number of effective frequencies that the UE measures. In some embodiments, measurement gaps set by the per CC gap configuration may be network controlled small gaps (NCSG). Such gaps may have gap times of less than 6 ms. Other gaps may have 6 ms times, or associated times that are larger or smaller. In some embodiments, a memory coupled to the processing circuitry is configured to store a first table comprising a set of carrier aggregation (CA) capabilities of the UE and a set of gap preferences associated with the set of CA capabilities, and information from this table may be sent as an indication of UE per CC preferences. In some embodiments in preference information indicates per CC preferences for each CC carrier, while in other embodiments, only preferences for configured bands are sent, and non-configured bands are excluded, even if supported.

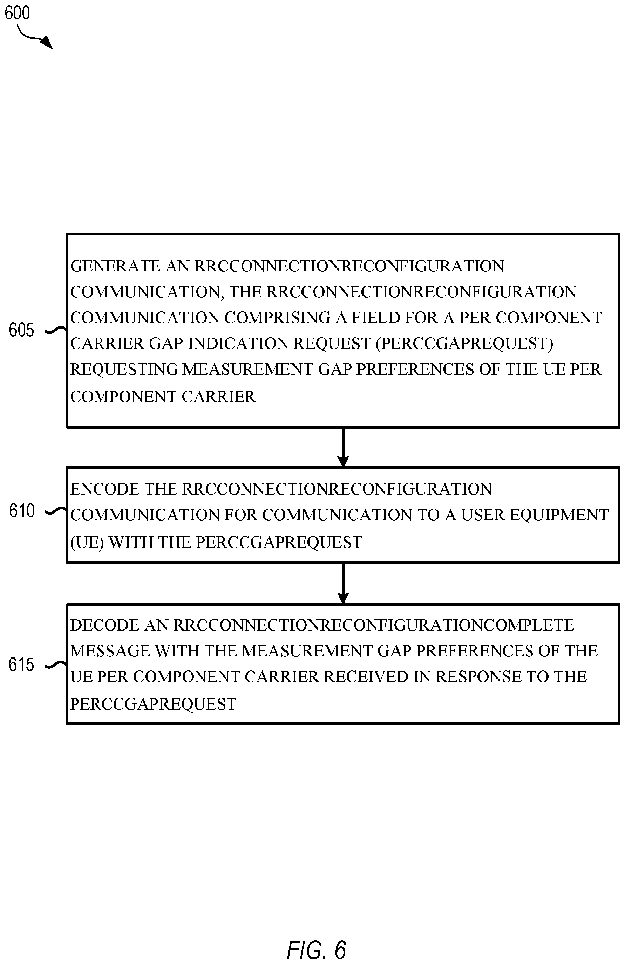

FIG. 6 illustrates an example method 600 that may be performed by a network device or an apparatus of a network device with processing circuitry, in accordance with embodiments described herein. Method 600 may, for example, be a complementary operation performed by an apparatus of an eNB while a corresponding UE performs method 500. In some embodiments, processors of different devices within a core network other than an eNB may perform some or all of the operations of method 600. In other embodiments, method 600 may be implemented as computer-readable instructions in a storage media that, when executed by one or more processors of one or more network devices (e.g. an eNB or other device of a 3GPP network), cause the one or more devices to perform method 600.

Method 600 begins with operation 602 to generate an RRCConnectionReconfiguration communication, the RRCConnectionReconfiguration communication comprising a filed for a per component carrier gap indication request (perCCgapRequest) requesting measurement gap preferences of the UE per component carrier. Then, in operation 604 the circuitry of the network device apparatus encodes an RRCConnectionReconfiguration communication for communication to a user equipment (UE) with the perCCgapRequest. Following this, an RRCConnectionReconfigurationComplete message is decoded in operation 606 with the measurement gap preferences of the UE per component carrier received in response to the PerCCgapRequest. In various embodiments the network may then synchronize the gaps with the UE for measurements on a per CC basis as determined from the above described information. Further, method 600 may be performed with any corresponding data or operations described above for a UE as applied to an eNB or network device communicating with the UE to implement per CC measurement gaps.

Methods 500 and 600 describe particular embodiments, but it will be apparent that additional methods, in accordance with the embodiments described herein, are possible with repeated or intervening operations to achieve UE provisioning. For example, additional embodiments of operations at a UE are described above, and it will be apparent that other corresponding eNB or network device operations other than those of method 600 will occur in conjunction with the described MME operations. Further still, any embodiments described above may be performed with repeated operations or intervening operations in various different embodiments.

The foregoing description of one or more implementations provides illustration and description, but is not intended to be exhaustive or to limit the scope of embodiments to the precise form disclosed. Modifications and variations are possible in light of the above teachings or may be acquired from practice of various embodiments. Additionally, other example embodiments may include any examples described above with the individual operations or device elements repeated or ordered with intervening elements or operations in any functional order.

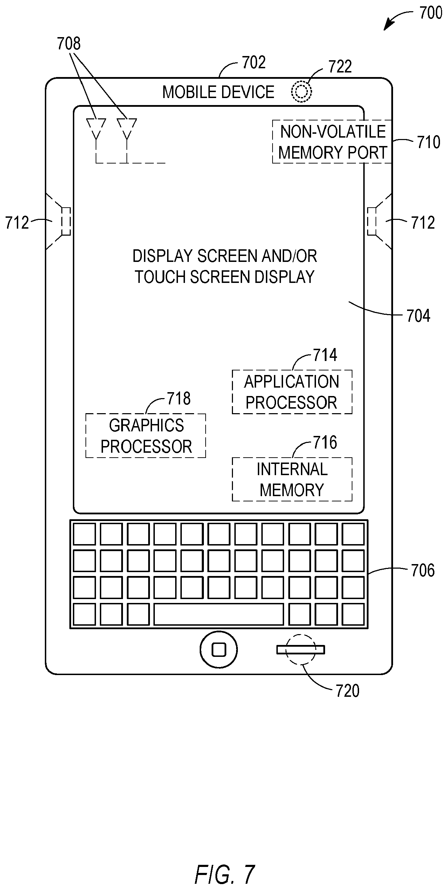

FIG. 7 shows an example UE 700. The UE 700 may be an implementation of the UE 102 or any device described herein. The UE 700 can include one or more antennas 708 configured to communicate with a transmission station, such as a base station, an eNB, or another type of wireless WAN (WWAN) access point. The UE 700 can communicate using separate antennas for each wireless communication standard or shared antennas for multiple wireless communication standards. The UE 700 can communicate in a wireless local area network (WLAN), a wireless personal area network (WPAN), and/or a WWAN.

FIG. 7 also shows a microphone 720 and one or more speakers 712 that can be used for audio input and output to and from the UE 700. As a headed device, UE 700 includes one or more interfaces for a UI. UE 700 particularly includes display screen 704, which can be a liquid crystal display (LCD) screen or another type of display screen such as an organic light-emitting diode (OLED) display. The display screen 704 can be configured as a touch screen. The touch screen can use capacitive, resistive, or another type of touch-screen technology. An application processor 714 and a graphics processor 718 can be coupled to an internal memory 716 to provide processing and display capabilities. A non-volatile memory port 710 can also be used to provide data input/output (I/O) options to a user. The non-volatile memory port 710 can also be used to expand the memory capabilities of the UE 700. A keyboard 706 can be integrated with the UE 700 or wirelessly connected to the UE 700 to provide additional user input. A virtual keyboard can also be provided using the touch screen. A camera 722 located on the front (display screen 704) side or the rear side of the UE 700 can also be integrated into a housing 702 of the UE 700.

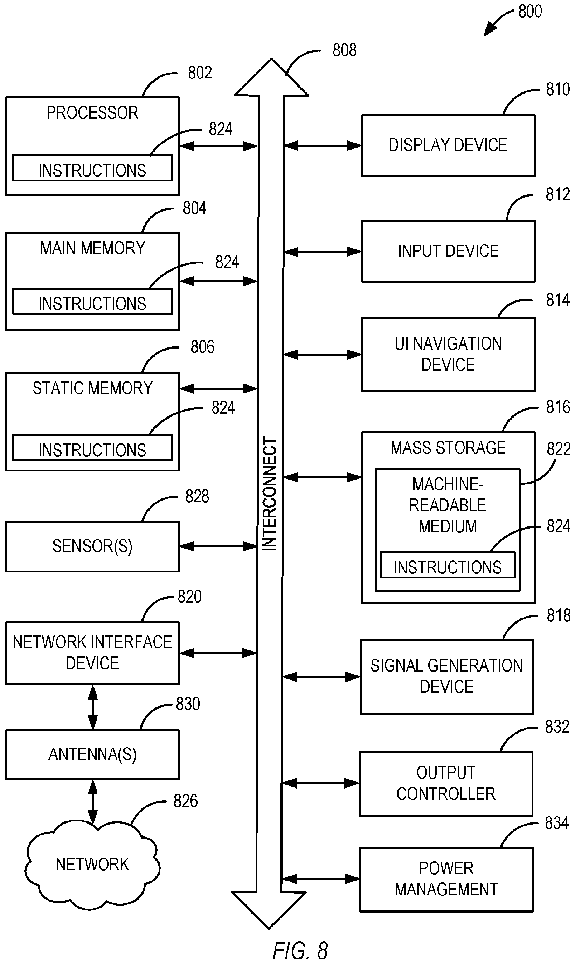

FIG. 8 is a block diagram illustrating an example computer system machine 800 upon which any one or more of the methodologies herein discussed can be run, and which may be used to implement the eNB 104, the UE 102, or any other device described herein. In various alternative embodiments, the computer system machine 800 operates as a standalone device or can be connected (e.g., networked) to other machines. In a networked deployment, the computer system machine 800 can operate in the capacity of either a server or a client machine in server-client network environments, or it can act as a peer machine in peer-to-peer (or distributed) network environments. The computer system machine 800 can be a personal computer (PC) that may or may not be portable (e.g., a notebook or a netbook), a tablet, a set-top box (STB), a gaming console, a Personal Digital Assistant (PDA), a mobile telephone or smartphone, a web appliance, a network router, a network switch, a network bridge, or any machine capable of executing instructions (sequential or otherwise) that specify actions to be taken by that machine. Further, while only a single computer system machine 800 is illustrated, the term "machine" shall also be taken to include any collection of machines that individually or jointly execute a set (or multiple sets) of instructions to perform any one or more of the methodologies discussed herein.

The example computer system machine 800 includes a processor 802 (e.g., a central processing unit (CPU), a graphics processing unit (GPU), or both), a main memory 804, and a static memory 806, which communicate with each other via an interconnect 808 (e.g., a link, a bus, etc.). The computer system machine 800 can further include a video display device 810, an alphanumeric input device 812 (e.g., a keyboard), and a user interface (UI) navigation device 814 (e.g., a mouse). In one embodiment, the video display device 810, alphanumeric input device 812, and UI navigation device 814 are a touch screen display. The computer system machine 800 can additionally include a mass storage device 816 (e.g., a drive unit), a signal generation device 818 (e.g., a speaker), an output controller 832, a power management controller 834, a network interface device 820 (which can include or operably communicate with one or more antennas 830, transceivers, or other wireless communications hardware), and one or more sensors 828, such as a GPS sensor, compass, location sensor, accelerometer, or other sensor.

The mass storage device 816 includes a machine-readable medium 822 on which is stored one or more sets of data structures and instructions 824 (e.g., software) embodying or utilized by any one or more of the methodologies or functions described herein. The instructions 824 can also reside, completely or at least partially, within the main memory 804, static memory 806, and/or processor 802 during execution thereof by the computer system machine 800, with the main memory 804, the static memory 806, and the processor 802 also constituting machine-readable media.

While the machine-readable medium 822 is illustrated in an example embodiment to be a single medium, the term "machine-readable medium" can include a single medium or multiple media (e.g., a centralized or distributed database, and/or associated caches and servers) that store the one or more instructions 824. The term "machine-readable medium" shall also be taken to include any tangible medium that is capable of storing, encoding, or carrying instructions (e.g., instructions 824) for execution by the machine and that cause the machine to perform any one or more of the methodologies of the present disclosure, or that is capable of storing, encoding, or carrying data structures utilized by or associated with such instructions.

The instructions 824 can further be transmitted or received over a communications network 826 using a transmission medium via the network interface device 820 utilizing any one of a number of well-known transfer protocols (e.g., hypertext transfer protocol (HTTP)). The term "transmission medium" shall be taken to include any medium that is capable of storing, encoding, or carrying instructions for execution by the machine, and includes digital or analog communications signals or other intangible media to facilitate communication of such software.

Various techniques, or certain aspects or portions thereof, may take the form of program code (i.e., instructions 824) embodied in tangible media, such as floppy diskettes, CD-ROMs, hard drives, non-transitory computer-readable storage media, or any other machine-readable storage medium wherein, when the program code is loaded into and executed by a machine, such as a computer, the machine becomes an apparatus for practicing the various techniques. In the case of program code execution on programmable computers, the computer may include a processor, a storage medium readable by the processor (including volatile and non-volatile memory and/or storage elements), at least one input device, and at least one output device. The volatile and non-volatile memory and/or storage elements may be a Random Access Memory (RAM), Erasable Programmable Read-Only Memory (EPROM), flash drive, optical drive, magnetic hard drive, or other medium for storing electronic data. The eNB and UE may also include a transceiver module, a counter module, a processing module, and/or a clock module or timer module. One or more programs that may implement or utilize the various techniques described herein may use an application programming interface (API), reusable controls, and the like. Such programs may be implemented in a high-level procedural or object-oriented programming language to communicate with a computer system. However, the program(s) may be implemented in assembly or machine language, if desired. In any case, the language may be a compiled or interpreted language, and combined with hardware implementations.

Various embodiments may use 3GPP LTE/LTE-A, IEEE 702.11, and Bluetooth communication standards. Various alternative embodiments may use a variety of other WWAN, WLAN, and WPAN protocols and standards in connection with the techniques described herein. These standards include, but are not limited to, other standards from 3GPP (e.g., HSPA+, UMTS), IEEE 802.16 (e.g., 802.16p), or Bluetooth (e.g., Bluetooth 8.0, or like standards defined by the Bluetooth Special Interest Group) standards families. Other applicable network configurations can be included within the scope of the presently described communication networks. It will be understood that communications on such communication networks can be facilitated using any number of PANs, LANs, and WANs, using any combination of wired or wireless transmission mediums.

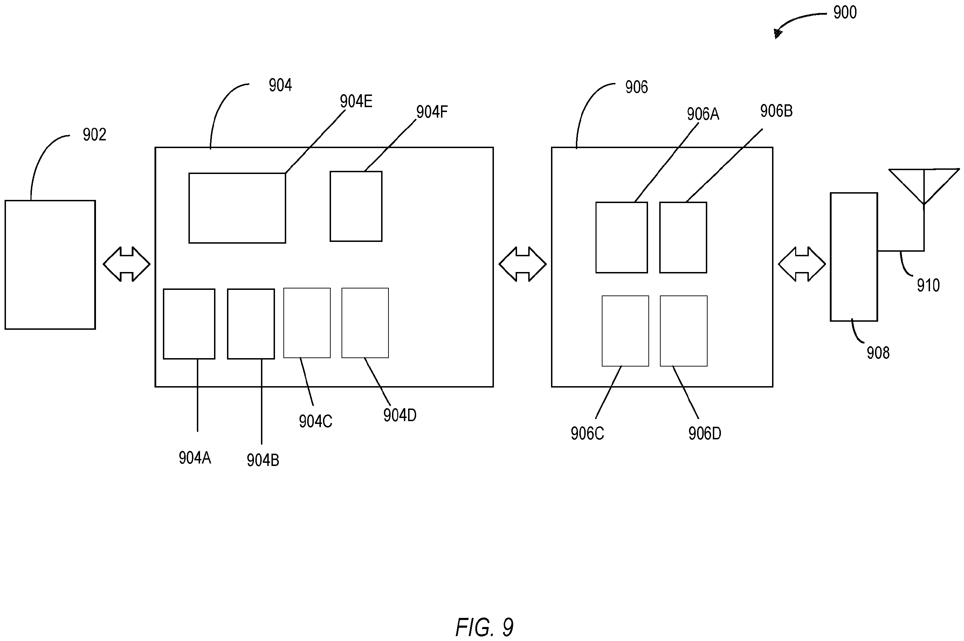

Embodiments described herein may be implemented into a system using any suitably configured hardware and/or software. FIG. 9 illustrates components of a UE 900 in accordance with some embodiments. At least some of the components shown may be used in the UE 102 (or eNB 104) shown in FIG. 1. The UE 900 and other components may be configured to use the synchronization signals as described herein. The UE 900 may be one of the UEs 102 shown in FIG. 1 and may be a stationary, non-mobile device or may be a mobile device. In some embodiments, the UE 900 may include application circuitry 902, baseband circuitry 904, RF circuitry 906, FEM circuitry 908, and one or more antennas 910, coupled together at least as shown. At least some of the baseband circuitry 904, RF circuitry 906, and FEM circuitry 908 may form a transceiver. In some embodiments, other network elements, such as the eNB 104, may contain some or all of the components shown in FIG. 9. Other of the network elements, such as the MME 122, may contain an interface, such as the S 1 interface, to communicate with the eNB 104 over a wired connection regarding the UE 900.

The application circuitry 902 may include one or more application processors. For example, the application circuitry 902 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the UE 900.

The baseband circuitry 904 may include circuitry such as, but not limited to, one or more single-core or multi-core processors. The baseband circuitry 904 may include one or more baseband processors and/or control logic to process baseband signals received from a receive signal path of the RF circuitry 906 and to generate baseband signals for a transmit signal path of the RF circuitry 906. The baseband circuitry 904 may interface with the application circuitry 902 for generation and processing of the baseband signals and for controlling operations of the RF circuitry 906. For example, in some embodiments, the baseband circuitry 904 may include a second generation (2G) baseband processor 904a, third generation (3G) baseband processor 904b, fourth generation (4G) baseband processor 904c, and/or other baseband processor(s) 904d for other existing generations, generations in development, or generations to be developed in the future (e.g., fifth generation (5G), etc.). The baseband circuitry 904 (e.g., one or more of the baseband processors 904a-d) may handle various radio control functions that enable communication with one or more radio networks via the RF circuitry 906. The radio control functions may include, but are not limited to, signal modulation/demodulation, encoding/decoding, radio frequency shifting, and so forth. In some embodiments, modulation/demodulation circuitry of the baseband circuitry 904 may include FFT, precoding, and/or constellation mapping/demapping functionality. In some embodiments, encoding/decoding circuitry of the baseband circuitry 904 may include convolution, tail-biting convolution, turbo, Viterbi, and/or Low-Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 904 may include elements of a protocol stack such as, for example, elements of an EUTRAN protocol including, for example, physical (PHY), MAC, radio link control (RLC), packet data convergence protocol (PDCP), and/or radio resource control (RRC) elements. A central processing unit (CPU) 904e of the baseband circuitry 904 may be configured to run elements of the protocol stack for signaling of the PHY, MAC, RLC, PDCP, and/or RRC layers. In some embodiments, the baseband circuitry 904 may include one or more audio digital signal processor(s) (DSPs) 904f. The audio DSP(s) 904f may be or include elements for compression/decompression and echo cancellation and may include other suitable processing elements in other embodiments. Components of the baseband circuitry 904 may be suitably combined in a single chip or a single chipset, or disposed on a same circuit board, in some embodiments. In some embodiments, some or all of the constituent components of the baseband circuitry 904 and the application circuitry 902 may be implemented together, such as, for example, on a system on a chip (SOC).

In some embodiments, the baseband circuitry 904 may provide for communication compatible with one or more radio technologies. For example, in some embodiments, the baseband circuitry 904 may support communication with an EUTRAN and/or other wireless metropolitan area networks (WMAN), a WLAN, or a WPAN. Embodiments in which the baseband circuitry 904 is configured to support radio communications of more than one wireless protocol may be referred to as multi-mode baseband circuitry. In some embodiments, the UE 900 can be configured to operate in accordance with communication standards or other protocols or standards, including IEEE 702.16 wireless technology (WiMax^{®}), IEEE 702.11 wireless technology (Wi-Fi^{®}) including IEEE 702.11ad, which operates in the 80 GHz millimeter wave spectrum, or various other wireless technologies such as global system for mobile communications (GSM), enhanced data rates for GSM evolution (EDGE), GSM EDGE radio access network (GERAN), universal mobile telecommunications system (UMTS), UMTS terrestrial radio access network (UTRAN), or other 2G, 3G, 4G, 5G, and like. technologies either already developed or to be developed.

The RF circuitry 906 may enable communication with wireless networks using modulated electromagnetic radiation through a non-solid medium. In various embodiments, the RF circuitry 906 may include switches, filters, amplifiers, and the like to facilitate the communication with the wireless network. The RF circuitry 906 may include a receive signal path which may include circuitry to down-convert RF signals received from the FEM circuitry 908 and provide baseband signals to the baseband circuitry 904. The RF circuitry 906 may also include a transmit signal path which may include circuitry to up-convert baseband signals provided by the baseband circuitry 904 and provide RF output signals to the FEM circuitry 908 for transmission.

In some embodiments, the RF circuitry 906 may include a receive signal path and a transmit signal path. The receive signal path of the RF circuitry 906 may include mixer circuitry 906a, amplifier circuitry 906b, and filter circuitry 906c. The transmit signal path of the RF circuitry 906 may include the filter circuitry 906c and the mixer circuitry 906a. The RF circuitry 906 may also include synthesizer circuitry 906d for synthesizing a frequency for use by the mixer circuitry 906a of the receive signal path and the transmit signal path. In some embodiments, the mixer circuitry 906a of the receive signal path may be configured to down-convert RF signals received from the FEM circuitry 908 based on the synthesized frequency provided by the synthesizer circuitry 906d. The amplifier circuitry 906b may be configured to amplify the down-converted signals, and the filter circuitry 906c may be a low-pass filter (LPF) or band-pass filter (BPF) configured to remove unwanted signals from the down-converted signals to generate output baseband signals. Output baseband signals may be provided to the baseband circuitry 904 for further processing. In some embodiments, the output baseband signals may be zero-frequency baseband signals, although this is not a requirement. In some embodiments, the mixer circuitry 906a of the receive signal path may comprise passive mixers, although the scope of the embodiments is not limited in this respect.

In some embodiments, the mixer circuitry 906a of the transmit signal path may be configured to up-convert input baseband signals based on the synthesized frequency provided by the synthesizer circuitry 906d to generate RF output signals for the FEM circuitry 908. The baseband signals may be provided by the baseband circuitry 904 and may be filtered by the filter circuitry 906c. The filter circuitry 906c may include a LPF, although the scope of the embodiments is not limited in this respect.

In some embodiments, the mixer circuitry 906a of the receive signal path and the mixer circuitry 906a of the transmit signal path may include two or more mixers and may be arranged for quadrature downconversion and/or upconversion, respectively. In some embodiments, the mixer circuitry 906a of the receive signal path and the mixer circuitry 906a of the transmit signal path may include two or more mixers and may be arranged for image rejection (e.g., Hartley image rejection). In some embodiments, the mixer circuitry 906a of the receive signal path and the mixer circuitry 906a of the transmit signal path may be arranged for direct downconversion and/or direct upconversion, respectively. In some embodiments, the mixer circuitry 906a of the receive signal path and the mixer circuitry 906a of the transmit signal path may be configured for superheterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 906 may include analog-to-digital converter (ADC) and digital-to-analog converter (DAC) circuitry and the baseband circuitry 904 may include a digital baseband interface to communicate with the RF circuitry 906.

In some dual-mode embodiments, a separate radio integrated circuit (IC) circuitry may be provided for processing signals for each spectrum, although the scope of the embodiments is not limited in this respect.

In some embodiments, the synthesizer circuitry 906d may be a fractional-N synthesizer or a fractional N/N+1 synthesizer, although the scope of the embodiments is not limited in this respect, as other types of frequency synthesizers may be suitable. For example, the synthesizer circuitry 906d may be a delta-sigma synthesizer, a frequency multiplier, or a synthesizer comprising a phase-locked loop with a frequency divider.

The synthesizer circuitry 906d may be configured to synthesize an output frequency for use by the mixer circuitry 906a of the RF circuitry 906 based on a frequency input and a divider control input. In some embodiments, the synthesizer circuitry 906d may be a fractional N/N+1 synthesizer.

In some embodiments, frequency input may be provided by a voltage controlled oscillator (VCO), although that is not a requirement. Divider control input may be provided by either the baseband circuitry 904 or the application circuitry 902 depending on the desired output frequency. In some embodiments, a divider control input (e.g., N) may be determined from a look-up table based on a channel indicated by the application circuitry 902.

The synthesizer circuitry 906d of the RF circuitry 906 may include a divider, a delay-locked loop (DLL), a multiplexer, and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump, and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, the synthesizer circuitry 906d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (f_{LO}). In some embodiments, the RF circuitry 906 may include an IQ/polar converter.

The FEM circuitry 908 may include a receive signal path, which may include circuitry configured to operate on RF signals received from the one or more antennas 910, amplify the received signals, and provide the amplified versions of the received signals to the RF circuitry 906 for further processing. The FEM circuitry 908 may also include a transmit signal path, which may include circuitry configured to amplify signals for transmission provided by the RF circuitry 906 for transmission by one or more of the one or more antennas 910.

In some embodiments, the FEM circuitry 908 may include a Tx/Rx switch to switch between transmit mode and receive mode operation. The FEM circuitry 908 may include a receive signal path and a transmit signal path. The receive signal path of the FEM circuitry 908 may include a low-noise amplifier (LNA) to amplify received RF signals and provide the amplified received RF signals as an output (e.g., to the RF circuitry 906). The transmit signal path of the FEM circuitry 908 may include a power amplifier (PA) to amplify input RF signals (e.g., provided by the RF circuitry 906), and one or more filters to generate RF signals for subsequent transmission (e.g., by one or more of the one or more antennas 910).

In some embodiments, the UE 900 may include additional elements such as, for example, a memory/storage, display, camera, sensor, and/or I/O interface as described in more detail below. In some embodiments, the UE 900 described herein may be part of a portable wireless communication device, such as a PDA, a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), or another device that may receive and/or transmit information wirelessly. In some embodiments, the UE 900 may include one or more user interfaces designed to enable user interaction with the system and/or peripheral component interfaces designed to enable peripheral component interaction with the system. For example, the UE 900 may include one or more of a keyboard, a keypad, a touchpad, a display, a sensor, a non-volatile memory port, a universal serial bus (USB) port, an audio jack, a power supply interface, one or more antennas, a graphics processor, an application processor, a speaker, a microphone, and other I/O components. The display may be an LCD or light-emitting diode (LED) screen including a touch screen. The sensor may include a gyro sensor, an accelerometer, a proximity sensor, an ambient light sensor, and a positioning unit. The positioning unit may communicate with components of a positioning network, e.g., a GPS satellite.

The antennas 910 may comprise one or more directional or omnidirectional antennas, including, for example, dipole antennas, monopole antennas, patch antennas, loop antennas, microstrip antennas, or other types of antennas suitable for transmission of RF signals. In some multiple-input multiple-output (MIMO) embodiments, the antennas 910 may be effectively separated to benefit from spatial diversity and the different channel characteristics that may result.

Although the UE 900 is illustrated as having several separate functional elements, one or more of the functional elements may be combined and may be implemented by combinations of software-configured elements, such as processing elements including DSPs, and/or other hardware elements. For example, some elements may comprise one or more microprocessors, DSPs, field-programmable gate arrays (FPGAs), application-specific integrated circuits (ASICs), radio-frequency integrated circuits (RFICs), and combinations of various hardware and logic circuitry for performing at least the functions described herein. In some embodiments, the functional elements may refer to one or more processes operating on one or more processing elements.

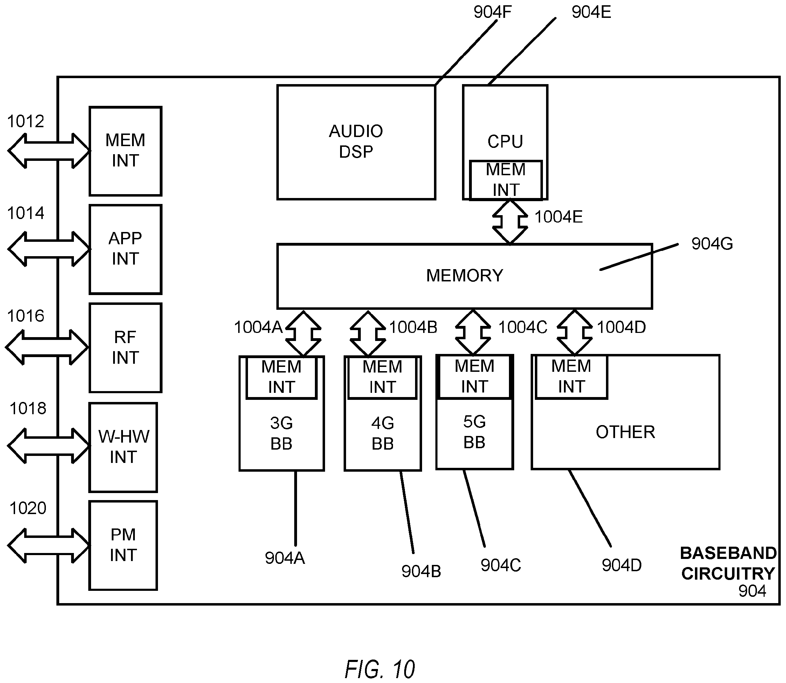

FIG. 10 illustrates example interfaces of baseband circuitry in accordance with some embodiments. As discussed above, the baseband circuitry 904 of FIG. 9 may comprise processors 904A-804E and a memory 904G utilized by said processors. Each of the processors 904A-804E may include a memory interface, 1004A-904E, respectively, to send/receive data to/from the memory 904G.

The baseband circuitry 904 may further include one or more interfaces to communicatively couple to other circuitries/devices, such as a memory interface 1012 (e.g., an interface to send/receive data to/from memory external to the baseband circuitry 904), an application circuitry interface 1014 (e.g., an interface to send/receive data to/from the application circuitry 902 of FIG. 9), an RF circuitry interface 1016 (e.g., an interface to send/receive data to/from RF circuitry 906 of FIG. 9), a wireless hardware connectivity interface 1018 (e.g., an interface to send/receive data to/from Near Field Communication (NFC) components, Bluetooth^{®} components (e.g., Bluetooth^{®} Low Energy), Wi-Fi^{®} components, and other communication components), and a power management interface 1020 (e.g., an interface to send/receive power or control signals to/from the PMC 912.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client, or server computer system) or one or more hardware processors may be configured by firmware or software (e.g., instructions, an application portion, or an application) as a module that operates to perform specified operations. In an example, the software may reside on a communication device-readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

While the communication device-readable medium is illustrated as a single medium, the term "communication device-readable medium" may include a single medium or multiple media (e.g., a centralized or distributed database, and/or associated caches and servers) configured to store the one or more instructions.

The term "communication device-readable medium" may include any medium that is capable of storing, encoding, or carrying instructions for execution by the communication device and that cause the communication device to perform any one or more of the techniques of the present disclosure, or that is capable of storing, encoding, or carrying data structures used by or associated with such instructions. Non-limiting communication device-readable medium examples may include solid-state memories, and optical and magnetic media. Specific examples of communication device-readable media may include: non-volatile memory, such as semiconductor memory devices (e.g., EPROM, Electrically Erasable Programmable Read-Only Memory (EEPROM)) and flash memory devices; magnetic disks, such as internal hard disks and removable disks; magneto-optical disks; RAM; and CD-ROM and DVD-ROM disks. In some examples, communication device-readable media may include non-transitory communication device-readable media. In some examples, communication device-readable media may include communication device-readable media that is not a transitory propagating signal.

The instructions may further be transmitted or received over a communications network using a transmission medium via a network interface device utilizing any one of a number of transfer protocols (e.g., frame relay, internet protocol (IP), transmission control protocol (TCP), user datagram protocol (UDP), HTTP, etc.). Example communication networks may include a LAN, a WAN, a packet data network (e.g., the Internet), mobile telephone networks (e.g., cellular networks), Plain Old Telephone Service (POTS) networks, wireless data networks (e.g., IEEE 702.11 family of standards known as Wi-Fi^{®}, IEEE 702.16 family of standards known as WiMAX^{®}), IEEE 702.15.4 family of standards, an LTE family of standards, a Universal Mobile Telecommunications System (UMTS) family of standards, or peer-to-peer (P2P) networks, among others. In an example, the network interface device may include one or more physical jacks (e.g., Ethernet, coaxial, or phone jacks) or one or more antennas to connect to the communications network. In an example, the network interface device may include a plurality of antennas to wirelessly communicate using single-input multiple-output (SIMO), MIMO, or multiple-input single-output (MISO) techniques. In some examples, the network interface device may wirelessly communicate using Multiple User MIMO techniques. The term "transmission medium" shall be taken to include any intangible medium that is capable of storing, encoding, or carrying instructions for execution by the communication device, and includes digital or analog communications signals or other intangible media to facilitate communication of such software.

Embodiments may be implemented in one or a combination of hardware, firmware, and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), RAM, magnetic disk storage media, optical storage media, flash-memory devices, and other storage devices and media. Some embodiments may include one or more processors and may be configured with instructions stored on a computer-readable storage device.

Although an embodiment has been described with reference to specific example embodiments, it will be evident that various modifications and changes may be made to these embodiments without departing from the broader scope of the present disclosure. Accordingly, the specification and drawings are to be regarded in an illustrative rather than a restrictive sense. The accompanying drawings that form a part hereof show, by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure. This Detailed Description, therefore, is not to be taken in a limiting sense, and the scope of various embodiments is defined only by the appended claims, along with the full range of equivalents to which such claims are entitled.

Such embodiments of the subject matter may be referred to herein, individually and/or collectively, by the term "embodiments" merely for convenience and without intending to voluntarily limit the scope of this application to any single inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended; that is, a system, UE, article, composition, formulation, or process that includes elements in addition to those listed after such a term in a claim is still deemed to fall within the scope of that claim. Moreover, in the following claims, the terms "first," "second," "third," etc. are used merely as labels, and are not intended to impose numerical requirements on their objects.

The Abstract of the Disclosure is provided to comply with 37 C.F.R. § 1.72(b), requiring an abstract that will allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. An apparatus of a user equipment, UE, (310) the apparatus comprising:
an interface configured to receive an RRCConnectionReconfiguration communication from an evolved node B, eNB, the RRCConnectionReconfiguration communication comprising a field for a per component carrier gap indication request, perCCgapRequest, requesting measurement gap preferences of the UE per component carrier; and
processing circuitry coupled to the interface and configured to:
decode (505) the RRCConnectionReconfiguration communication from the eNB to identify the PerCCgapRequest;
set content (510) of an RRCConnectionReconfigurationComplete message to include an indication of the measurement gap preferences of the UE (310) per component carrier in response to the PerCCgapRequest, wherein the indication of the measurement gap preferences include, for each of a plurality of serving cell identifiers, IDs, an indication of whether or not the UE needs a measurement gap and whether or not the measurement gap is a network controlled small gap, NCSG, for the respective component carrier; and
initiate transmission (515) of the RRCConnectionReconfigurationComplete message comprising the measurement gap preferences of the UE per component carrier to the eNB.

2. The apparatus of claim 1 wherein the perCCgapRequest comprises a non- Critical Extension of the RRCConnectionReconfiguration communication.

3. The apparatus of claim 1 wherein the processing circuitry is further configured to set the content of the RRCConnectionReconfigurationComplete message with a number of effective frequencies that the UE measures.

4. The apparatus of claim 1 wherein the processing circuitry is further configured to encode a capability message for communication to the network prior to decoding the RRCConnectionReconfiguration communication.

5. The apparatus of claim 4 wherein the capability message indicates a per component carrier, CC, capability of the UE; and
wherein the perCCgapRequest of the RRCConnectionReconfiguration communication is generated in response to the capability message.

6. The apparatus of claims 1-5, wherein the processing circuitry is further configured to:
initiate a first measurement of a first frequency band using a first measurement gap; and
initiate a second measurement of a second frequency band without using an associated measurement gap;
wherein a corresponding gap setting for each measurement is selected based on a reconfiguration of measurement gap configurations at the network in response to the RRC Connection Reconfiguration Complete message.

7. The apparatus of claim 6 wherein the first measurement gap comprises a network controlled small gap, NCSG; and
wherein the RRC Connection Reconfiguration Complete message comprises a set of NCSG settings.

8. The apparatus of claims 1-5 further comprising a memory coupled to the processing circuitry and configured to store a first table comprising a set of carrier aggregation, CA, capabilities of the UE and a set of gap preferences associated with the set of CA capabilities; and
wherein the first table further comprises a gap preference for each frequency band under each operating condition of the set of CA capabilities of the UE.

9. The apparatus of claim 1 wherein the PerCCgapRequest of the RRCConnectionRecofiguration message is configured to request gap preferences for a set of serving bands configured by the network prior to decoding of the RRCConnectionReconfiguration communication; and
wherein the RRCConnectionReconfigurationComplete message comprises the gap preferences for the set of serving bands configured by the network without gap preferences for serving bands not configured by the network for use with the UE.

10. The apparatus of claim 1 wherein the RRCConnectionReconfigurationComplete message comprises gap preferences for all band combinations supported by the UE including gap preferences for serving bands not configured by the network for use with the UE.

11. The apparatus of claim 1 further comprising an antenna coupled to the processing circuitry, wherein the antenna is configured to receive the RRCConnectionReconfiguration communication from the eNB and transmit the RRCConnectionReconfigurationComplete message to the eNB.

12. An apparatus of a network device for per component carrier measurement gap configuration, the apparatus comprising:
a memory configured to store an RRCConnectionReconfiguration communication, the RRCConnectionReconfiguration communication comprising a field for a per component carrier gap indication request, perCCgapRequest, requesting measurement gap preferences of the UE per component carrier; and
processing circuitry coupled to the memory and configured to:
encode (610) RRCConnectionReconfiguration communication for communication to a user equipment, UE, with the perCCgapRequest; and
decode (615) an RRCConnectionReconfigurationComplete message with the measurement gap preferences of the UE per component carrier in response to the PerCCgap Request, wherein the indication of the measurement gap preferences include, for each of a plurality of serving cell identifiers, IDs, an indication of whether or not the UE needs a measurement gap and whether or not the measurement gap is a network controlled small gap, NCSG, for the respective component carrier.

13. The apparatus of claim 12 wherein the perCCgapRequest comprises a non- Critical Extension of the RRCConnectionReconfiguration communication;
wherein the processing circuitry is further configured to decode the RRCConnectionReconfigurationComplete message to identify a number of effective frequencies that the UE measures;
wherein the processing circuitry is further configured to reconfigure a measurement gap configuration based on the measurement gap preferences of the UE per component carrier as identified from the RRCConnectionReconfigurationComplete message; and
initiate a measurement request to the UE based on the measurement gap configuration as reconfigured based on the measurement gap preferences of the UE per component carrier.

14. A non-transitory computer readable storage medium comprising instructions
that, when executed by one or more processors of a network device, cause the network device to:
generate (605) an RRCConnectionReconfiguration communication, the RRCConnectionReconfiguration communication comprising a filed for a per component carrier gap indication request, perCCgapRequest, requesting measurement gap preferences of the UE per component carrier;
encode (610) RRCConnectionReconfiguration communication for communication to a user equipment, UE, with the perCCgapRequest; and
decode (615) an RRCConnectionReconfigurationComplete message with the measurement gap preferences of the UE per component carrier received in response to the PerCCgapRequest, wherein the indication of the measurement gap preferences include, for each of a plurality of serving cell identifiers, IDs, an indication of whether or not the UE needs a measurement gap and whether or not the measurement gap is a network controlled small gap, NCSG, for the respective component carrier.

15. The storage medium of claim 14 wherein the processing circuitry is further configured to decode the RRCConnectionReconfigurationComplete message to identify a number of effective frequencies that the UE measures.

## Patentansprüche

1. Vorrichtung eines Benutzergeräts, UE, (310), wobei die Vorrichtung umfasst:
eine Schnittstelle, die konfiguriert ist, um eine RRCConnectionReconfiguration-Kommunikation von einem evolved Node B, eNB, zu empfangen, wobei die RRCConnectionReconfiguration-Kommunikation ein Feld für eine per Component Carrier Gap Indication Request, perCCgapRequest, umfasst, das Messlückenpräferenzen des UE pro Komponententräger anfordert; und
eine Verarbeitungsschaltung, die mit der Schnittstelle gekoppelt und konfiguriert ist, um:
die RRCConnectionReconfiguration-Kommunikation vom eNB zu dekodieren (505), um die PerCCgapRequest zu identifizieren;
einen Inhalt (510) einer RRCConnectionReconfigurationComplete-Nachricht festzulegen, um eine Anzeige der Messlückenpräferenzen des UE (310) pro Komponententräger als Reaktion auf die PerCCgapRequest zu umfassen, wobei die Anzeige der Messlückenpräferenzen für jede von mehreren Serving Cell Identifiers, IDs, eine Anzeige einschließt, ob das UE eine Messlücke benötigt oder nicht und ob die Messlücke eine Network Controlled Small Gap, NCSG, für den jeweiligen Komponententräger ist oder nicht; und
eine Übertragung (515) der RRCConnectionReconfigurationComplete-Nachricht, die die Messlückenpräferenzen des UE pro Komponententräger umfasst, an den eNB zu initiieren.

2. Vorrichtung nach Anspruch 1, wobei die perCCgapRequest eine nicht kritische Erweiterung der RRCConnectionReconfiguration-Kommunikation umfasst.

3. Vorrichtung nach Anspruch 1, wobei die Verarbeitungsschaltung ferner konfiguriert ist, um den Inhalt der RRCConnectionReconfigurationComplete-Nachricht mit einer Anzahl von effektiven Frequenzen festzulegen, die das UE misst.

4. Vorrichtung nach Anspruch 1, wobei die Verarbeitungsschaltung ferner konfiguriert ist, um eine Fähigkeitsnachricht zur Kommunikation an das Netzwerk vor dem Dekodieren der RRCConnectionReconfiguration-Kommunikation zu kodieren.

5. Vorrichtung nach Anspruch 4, wobei die Fähigkeitsnachricht eine Pro-Komponententräger-, CC-, Fähigkeit des UE anzeigt; und
wobei die perCCgapRequest der RRCConnectionReconfiguration-Kommunikation als Reaktion auf die Fähigkeitsnachricht erzeugt wird.

6. Vorrichtung nach den Ansprüchen 1-5, wobei die Verarbeitungsschaltung ferner konfiguriert ist, um:
eine erste Messung eines ersten Frequenzbands unter Verwendung einer ersten Messlücke zu initiieren; und
eine zweite Messung eines zweiten Frequenzbands ohne Verwendung einer zugehörigen Messlücke zu initiieren;
wobei eine entsprechende Lückeneinstellung für jede Messung basierend auf einer Rekonfiguration von Messlückenkonfigurationen am Netzwerk als Reaktion auf die RRCConnectionReconfigurationComplete-Nachricht ausgewählt wird.

7. Vorrichtung nach Anspruch 6, wobei die erste Messlücke eine Network Controlled Small Gap, NCSG, umfasst; und
wobei die RRCConnectionReconfigurationComplete-Nachricht einen Satz von NCSG-Einstellungen umfasst.

8. Vorrichtung nach den Ansprüchen 1-5, ferner umfassend einen Speicher, der mit der Verarbeitungsschaltung gekoppelt und konfiguriert ist, um eine erste Tabelle zu speichern, die einen Satz von Trägeraggregations-, CA-, Fähigkeiten des UE und einen Satz von Lückenpräferenzen umfasst, die dem Satz von CA-Fähigkeiten zugeordnet sind; und
wobei die erste Tabelle ferner eine Lückenpräferenz für jedes Frequenzband unter jeder Betriebsbedingung des Satzes von CA-Fähigkeiten des UE umfasst.

9. Vorrichtung nach Anspruch 1, wobei die PerCCgapRequest der RRCConnectionReconfiguration-Nachricht konfiguriert ist, um Lückenpräferenzen für einen Satz von Versorgungsbändern anzufordern, die durch das Netzwerk vor dem Dekodieren der RRCConnectionReconfiguration-Kommunikation konfiguriert sind; und
wobei die RRCConnectionReconfigurationComplete-Nachricht die Lückenpräferenzen für den Satz von Versorgungsbändern umfasst, die durch das Netzwerk ohne Lückenpräferenzen für Versorgungsbänder konfiguriert sind, die nicht durch das Netzwerk zur Verwendung mit dem UE konfiguriert sind.

10. Vorrichtung nach Anspruch 1, wobei die RRCConnectionReconfigurationComplete-Nachricht Lückenpräferenzen für alle Bandkombinationen umfasst, die durch das UE unterstützt werden, einschließlich Lückenpräferenzen für Versorgungsbänder, die nicht durch das Netzwerk zur Verwendung mit dem UE konfiguriert sind.

11. Vorrichtung nach Anspruch 1, ferner umfassend eine Antenne, die mit der Verarbeitungsschaltung gekoppelt ist, wobei die Antenne konfiguriert ist, um die RRCConnectionReconfiguration-Kommunikation vom eNB zu empfangen und die RRCConnectionReconfigurationComplete-Nachricht an den eNB zu übertragen.

12. Vorrichtung einer Netzwerkvorrichtung zur per Component Carrier Measurement Gap-Konfiguration, wobei die Vorrichtung umfasst:
einen Speicher, der konfiguriert ist, um eine RRCConnectionReconfiguration-Kommunikation zu speichern, wobei die RRCConnectionReconfiguration-Kommunikation ein Feld für eine per Component Carrier Gap Indication Request, perCCgapRequest, umfasst, das Messlückenpräferenzen des UE pro Komponententräger anfordert; und
eine Verarbeitungsschaltung, die mit dem Speicher gekoppelt und konfiguriert ist, um:
eine RRCConnectionReconfiguration-Kommunikation zur Kommunikation mit einem Benutzergerät, UE, mit der perCCgapRequest zu codieren (610); und
eine RRCConnectionReconfigurationComplete-Nachricht mit den Messlückenpräferenzen des UE pro Komponententräger als Reaktion auf die PerCCgapRequest zu dekodieren (615), wobei die Anzeige der Messlückenpräferenzen für jede von mehreren Serving Cell Identifiers, IDs, eine Anzeige umfasst, ob das UE eine Messlücke benötigt oder nicht und ob die Messlücke eine Network Controlled Small Gap, NCSG, für den jeweiligen Komponententräger ist oder nicht.

13. Vorrichtung nach Anspruch 12, wobei die perCCgapRequest eine nicht kritische Erweiterung der RRCConnectionReconfiguration-Kommunikation umfasst;
wobei die Verarbeitungsschaltung ferner konfiguriert ist, um die RRCConnectionReconfigurationComplete-Nachricht zu dekodieren, um eine Anzahl von effektiven Frequenzen zu identifizieren, die das UE misst;
wobei die Verarbeitungsschaltung ferner konfiguriert ist, um eine Messlückenkonfiguration basierend auf den Messlückenpräferenzen des UE pro Komponententräger, wie aus der RRCConnectionReconfigurationComplete-Nachricht identifiziert, zu rekonfigurieren; und
eine Messanforderung an das UE basierend auf der Messlückenkonfiguration, wie basierend auf den Messlückenpräferenzen des UE pro Komponententräger rekonfiguriert, zu initiieren.

14. Nicht flüchtiges computerlesbares Speichermedium, umfassend Anweisungen, die, wenn sie von einem oder mehreren Prozessoren einer Netzwerkvorrichtung ausgeführt werden, die Netzwerkvorrichtung veranlassen:
eine RRCConnectionReconfiguration-Kommunikation zu erzeugen (605), wobei die RRCConnectionReconfiguration-Kommunikation eine Datei für eine per Component Carrier Gap Indication Request, perCCgapRequest, umfasst, die Messlückenpräferenzen des UE pro Komponententräger anfordert;
eine RRCConnectionReconfiguration-Kommunikation zur Kommunikation mit einem Benutzergerät, UE, mit der perCCgapRequest zu codieren (610); und
eine RRCConnectionReconfigurationComplete-Nachricht mit den Messlückenpräferenzen des UE pro Komponententräger, die als Reaktion auf die PerCCgapRequest empfangen werden, zu dekodieren (615), wobei die Anzeige der Messlückenpräferenzen für jede von mehreren Serving Cell Identifiers, IDs, eine Anzeige umfasst, ob das UE eine Messlücke benötigt oder nicht und ob die Messlücke eine Network Controlled Small Gap, NCSG, für den jeweiligen Komponententräger ist oder nicht.

15. Speichermedium nach Anspruch 14, wobei die Verarbeitungsschaltung ferner konfiguriert ist, um die RRCConnectionReconfigurationComplete-Nachricht zu dekodieren, um eine Anzahl von effektiven Frequenzen zu identifizieren, die das UE misst.

## Revendications

1. Un appareil d'un équipement utilisateur, UE, (310), l'appareil comprenant :
une interface configurée pour recevoir une communication RRCConnectionReconfiguration en provenance d'un nœud B amélioré, eNB,
la communication RRCConnectionReconfiguration comprenant un champ pour une requête d'indication d'intervalle de porteuse pour chaque composante, perCCgapRequest, requérant des préférences d'intervalle de mesure de l'UE pour chaque composante de porteuse ; et
une circuiterie de traitement couplée à l'interface et configurée pour :
décoder (505) la communication RRCConnectionReconfiguration en provenance de l'eNB pour identifier la perCCgapRequest ;
déterminer le contenu (510) d'un message RRCConnectionReconfigurationComplete pour inclure une indication des préférences d'intervalle de mesure de l'UE (310) pour chaque composante de porteuse en réponse à la perCCgapRequest, l'indication de préférence d'intervalle de mesure comprenant, pour chacun d'une pluralité d'identifiants, ID, de cellule de desserte, une indication que l'UE a ou non besoin d'un intervalle de mesure et que l'intervalle de mesure est ou non un intervalle de mesure contrôlé par le réseau, NCSG, pour la composante de porteuse respective ; et
déclencher la transmission à l'eNB du message RRCConnectionReconfigurationComplete comprenant les préférences d'intervalle de mesure de l'UE pour chaque composante de porteuse.

2. L'appareil de la revendication 1, dans lequel la perCCgapRequest comprend une extension non-critique de la communication RRCConnectionReconfiguration.

3. L'appareil de la revendication 1, dans lequel la circuiterie de traitement est en outre configurée pour déterminer le contenu du message RRCConnectionReconfigurationComplete avec un nombre de fréquences effectives que mesure l'UE.

4. L'appareil de la revendication 1, dans lequel la circuiterie de traitement est en outre configurée pour coder un message de capacité pour communication au réseau avant décodage de la communication RRCConnectionReconfiguration.

5. L'appareil de la revendication 4, dans lequel les messages de capacité indiquent une capacité de l'UE pour chaque composante de porteuse, CC ; et dans lequel la perCCgapRequest de la communication RRCConnectionReconfiguration est générée en réponse au message de capacité.

6. L'appareil des revendications 1 à 5, dans lequel la circuiterie de traitement est en outre configurée pour :
lancer une première mesure d'une première bande de fréquences en utilisant un premier intervalle de mesure ; et
lancer une seconde mesure d'une seconde bande de fréquences sans utiliser l'intervalle de mesure associé ;
dans lequel une détermination d'intervalle correspondant pour chaque mesure est sélectionnée sur la base d'une reconfiguration de reconfigurations d'intervalle de mesure au niveau du réseau en réponse au message RRCConnectionReconfigurationComplete.

7. L'appareil de la revendication 6, dans lequel le premier intervalle de mesure comprend un petit intervalle contrôlé par le réseau, NCSG ; et
dans lequel le message RRCConnectionReconfigurationComplete comprend un ensemble de déterminations NCSG.

8. L'appareil des revendications 1 à 5, comprenant en outre une mémoire couplée à la circuiterie de traitement et configurée pour stocker une première table comprenant un ensemble de capacités d'agrégation de porteuses, CA, et un ensemble de préférences d'intervalle associées à l'ensemble de capacités CA; et
dans lequel la première table comprend en outre une préférence d'intervalle pour chaque bande de fréquences sous chaque condition opératoire de l'ensemble de capacités CA de l'UE.

9. L'appareil de la revendication 1, dans lequel la perCCgapRequest du message RRCConnectionReconfigurationComplete est configurée pour requérir des préférences d'intervalle pour un ensemble de bandes de desserte configuré par le réseau avant décodage de la communication RRCConnectionReconfiguration ; et
dans lequel le message RRCConnectionReconfigurationComplete comprend les préférences d'intervalle pour l'ensemble de bandes de dessertes configuré par le réseau sans préférences d'intervalle pour des bandes de desserte non configurées par le réseau pour être utilisées par l'UE.

10. L'appareil de la revendication 1, dans lequel le message RRCConnectionReconfigurationComplete comprend des préférences d'intervalle pour toutes les combinaisons de bandes supportées par l'UE, incluant des préférences d'intervalle pour des bandes de desserte non configurées par le réseau pour être utilisées par l'UE.

11. L'appareil de la revendication 1, comprenant en outre une antenne couplée à la circuiterie de traitement, dans lequel l'antenne est configurée pour recevoir la communication RRCConnectionReconfiguration de l'eNB et transmettre à l'eNB le message RRCConnectionReconfigurationComplete.

12. Un appareil d'un dispositif de réseau pour une configuration d'intervalles de mesure pour chaque composante de porteuse, l'appareil comprenant :
une mémoire configurée pour stocker une communication RRCConnectionReconfiguration, la communication RRCConnectionReconfiguration comprenant un champ pour une requête d'indication d'intervalle de porteuse pour chaque composante, perCCgapRequest, requérant des préférences d'intervalle de mesure de l'UE pour chaque composante de porteuse ; et
une circuiterie de traitement couplée à la mémoire et configurée pour :
coder (610) une communication RRCConnectionReconfiguration pour communication à un équipement utilisateur, UE, avec la perCCgapRequest ; et
décoder un message RRCConnectionReconfigurationComplete avec les préférences d'intervalle de mesure de l'UE pour chaque composante de porteuse en réponse à la perCCgapRequest, l'indication des préférences d'intervalle de mesure comprenant, pour chacun d'une pluralité d'identifiants, ID, de cellule de desserte, une indication que l'UE a ou non besoin d'un intervalle de mesure et que l'intervalle de mesure est ou non un petit intervalle contrôlé par le réseau, NCSG, pour la composante de porteuse respective.

13. L'appareil de la revendication 12, dans lequel la perCCgapRequest comprend une extension non critique de la communication RRCConnectionReconfiguration ;
dans lequel la circuiterie de traitement est en outre configurée pour décoder le message RRCConnectionReconfigurationComplete pour identifier un nombre de fréquences effectives que mesure l'UE ;
dans lequel la circuiterie de traitement est en outre configurée pour reconfigurer une configuration d'intervalle de mesure sur la base des préférences d'intervalle de mesure de l'UE pour chaque composante de porteuse de la manière identifiée d'après le message RRCConnectionReconfigurationComplete ; et
lancer une requête de mesure pour l'UE sur la base de la configuration d'intervalle de mesure telle que reconfigurée sur la base des préférences d'intervalle de mesure de l'UE pour chaque composante de porteuse.

14. Un support de stockage non transitoire lisible par calculateur comprenant des instructions qui, lorsqu'elles sont exécutées par un ou plusieurs processeurs d'un dispositif de réseau, font en sorte que le dispositif de réseau :
génère (605) une communication RRCConnectionReconfiguration, la communication RRCConnectionReconfiguration comprenant un champ pour une requête d'indication d'intervalle de porteuse pour chaque composante, perCCgapRequest, requérant des préférences d'intervalle de mesure de l'UE pour chaque composante de porteuse ;
code (610) une communication RRCConnectionReconfiguration pour communication à un équipement utilisateur, UE, avec la perCCgapRequest ; et
décode un message RRCConnectionReconfigurationComplete avec les préférences d'intervalle de mesure de l'UE pour chaque composante de porteuse en réponse à la perCCgapRequest, l'indication des préférences d'intervalle de mesure comprenant, pour chacun d'une pluralité d'identifiants, ID, de cellule de desserte, une indication que l'UE a ou non besoin d'un intervalle de mesure et que l'intervalle de mesure est ou non un petit intervalle contrôlé par le réseau, NCSG, pour la composante de porteuse respective.

15. Le support de stockage de la revendication 14, dans lequel la circuiterie de traitement est en outre configurée pour décoder le message RRCConnectionReconfigurationComplete pour identifier un nombre de fréquences effectives que mesure l'UE.
